## Europäisches Patentamt
## European Patent Office
## Office européen des brevets

(11) Numéro de publication : **0 147 290 B1**

(12) **FASCICULE DE BREVET EUROPÉEN**

(45) Date de publication du fascicule du brevet :
02.12.87

(21) Numéro de dépôt : **84402577.5**

(22) Date de dépôt : **13.12.84**

(51) Int. Cl.⁴ : **B 62 D   5/08**, B 62 D   3/12

(54) **Direction assistée hydraulique de véhicule automobile.**

(30) Priorité : **23.12.83 FR 8320977**

(43) Date de publication de la demande :
**03.07.85 Bulletin 85/27**

(45) Mention de la délivrance du brevet :
**02.12.87 Bulletin 87/49**

(84) Etats contractants désignés :
**DE FR GB IT**

(56) Documents cités :
EP-A- 0 021 950
FR-A- 1 364 591
FR-A- 2 184 211
FR-A- 2 193 938
GB-A- 1 588 593

(73) Titulaire : **AUTOMOBILES CITROEN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Camus, Gérard**
**15, rue des Bouchères**
**F-95240 Cormeilles-en-Parisis (FR)**

(74) Mandataire : **Boivin, Claude**
**9, rue Edouard-Charton**
**F-78000 Versailles (FR)**

## Description

La présente invention concerne une direction assistée hydraulique pour véhicule automobile comprenant un arbre de commande monté à rotation dans un boîtier et lié au volant, un arbre suiveur, également monté pivotant dans ce boitier et relié mécaniquement à un pignon en prise avec la crémaillère de direction, des moyens élastiques reliant l'arbre de commande et l'arbre suiveur de sorte qu'il se produit un déplacement angulaire relatif des deux arbres lorsqu'un couple est exercé sur l'arbre de commande, un distributeur hydraulique sensible à ce déplacement relatif, et un vérin d'assistance sur l'alimentation duquel est interposé le distributeur et dont l'élément mobile est relié à la crémaillère.

Le brevet européen 0 072 712 décrit une direction assistée hydraulique pour véhicule automobile, qui comprend un arbre de commande lié au volant et relié par une barre de torsion à un arbre suiveur qui porte un pignon en prise avec la crémaillère de direction. Des parties de l'arbre de commande et de l'arbre suiveur constituent les éléments d'un distributeur rotatif qui est interposé sur l'alimentation d'un vérin d'assistance. Lorsque le conducteur exerce un couple sur le volant, l'arbre de commande pivote élastiquement par rapport à l'arbre suiveur de sorte que le distributeur est actionné et envoie du liquide au vérin d'assistance de façon à déplacer la crémaillère de direction dans le sens correspondant au sens de pivotement du volant. On connaît également des directions assistées dans lesquelles le distributeur est à tiroir, qui est plus fiable. Mais l'utilisation d'un distributeur à tiroir dans la direction assistée connue par le brevet européen ci-dessus pose des problèmes techniques, car il est difficile et compliqué, dans cette direction assistée, de transformer le déplacement angulaire relatif des deux arbres de commande et suiveur en un mouvement de translation du tiroir du distributeur.

Le brevet FR-A-2 193 938 décrit de son côté une direction assistée dans laquelle le capteur de couple comprend un arbre de commande constituant un premier élément de transmission, un deuxième élément de transmission solidaire en rotation de l'arbre suiveur, et un élément de transmission intermédiaire coopérant par une liaison cannelée avec l'arbre de commande et relié au tiroir d'un distributeur à tiroir et par des fils métalliques élastiques au second élément de transmission. Mais cette direction assistée présente des frottements et est peu précise.

La présente invention a pour objet une direction assistée hydraulique pour véhicule automobile, qui est du type mentionné dans le préambule de la revendication 1 et correspondant à FR-A-2 193 938 et est au contraire très précise.

Cette direction assistée est caractérisée en ce que l'élément intermédiaire est relié au premier élément de transmission par un second jeu de lames flexibles qui sont dirigées obliquement en sens inverse par rapport aux lames flexibles du premier jeu.

L'élément intermédiaire qui agit sur le tiroir du distributeur est ainsi monté flottant entre des moyens élastiques disposés de part et d'autre de lui et agissant dans des sens contraires. Cet élément intermédiaire n'est ainsi soumis à aucun frottement, ce qui permet de tarer de façon précise le déplacement selon le couple.

Le premier élément de transmission et le second peuvent être constitués par des disques ou plateaux disposés en vis-à-vis, chacun des plateaux portant des pattes engagées avec un jeu entre des pattes de l'autre plateau. Ainsi, en cas de défaillance hydraulique, l'arbre suiveur est entraîné directement par l'arbre de commande, indépendamment de l'arbre intermédiaire.

Les éléments de transmission d'extrémité peuvent faire corps respectivement avec l'arbre de commande et l'arbre suiveur. Ils peuvent également être reliés à ces arbres par des engrenages.

Les deux arbres de commande et suiveur peuvent être coaxiaux et le distributeur fixé au boîtier dans l'axe de ces deux arbres, du côté opposé à l'arbre de commande par rapport à l'arbre suiveur, l'arbre de transmission passant dans un perçage axial de l'arbre suiveur. On obtient ainsi une direction assistée qui est particulièrement simple et compacte. Le corps du distributeur peut également être constitué par l'arbre de commande, son tiroir étant monté coulissant dans un alésage axial de cet arbre.

Dans le cas où les éléments de transmission sont reliés par des engrenages à l'arbre de commande et à l'arbre suiveur, le distributeur peut être fixé au boîtier coaxialement aux éléments de transmission. Dans une autre disposition le distributeur peut être constitué de deux demi-distributeurs disposés de part et d'autre des éléments de transmission et dont les tiroirs sont reliés à l'élément intermédiaire par deux arbres indépendants qui traversent chacun l'un des éléments de transmission d'extrémité. Il est alors possible d'appliquer d'une manière équilibrée sur les deux faces libres des tiroirs une contre-pression modulée en fonction d'un paramètre, par exemple la vitesse du véhicule.

De préférence une articulation à rotule est prévue entre le tiroir du distributeur et l'arbre de transmission relié à l'élément intermédiaire afin de rattraper un désaxage éventuel.

On a décrit ci-après, à titre d'exemples non limitatifs, divers modes de réalisation de la direction assistée selon la présente invention, avec référence aux dessins annexés dans lesquels :

La Figure 1 est un schéma général de la direction assistée ;

La Figure 2 est une vue en coupe axiale du boîtier d'assistance, dans un premier mode de réalisation ;

La Figure 3 en est une coupe transversale suivant III-III de la Figure 2 ;

La Figure 4 est une vue en perspective montrant l'élément de transmission intermédiaire et les lames flexibles qui lui sont fixées ;

La Figure 5 montre en coupe axiale un détail de la Figure 2, lorsqu'un couple est exercé sur l'arbre de commande ;

La Figure 6 est une vue en coupe axiale du boîtier d'assistance, dans un second mode de réalisation ;

La Figure 7 est une vue en coupe axiale du boîtier d'assistance, dans un troisième mode de réalisation dans lequel les éléments de transmission d'extrémité sont reliés par des engrenages aux arbres de commande et suiveur ;

La Figure 8 est une vue semblable à la figure 7, dans laquelle il est prévu deux demi-distributeurs.

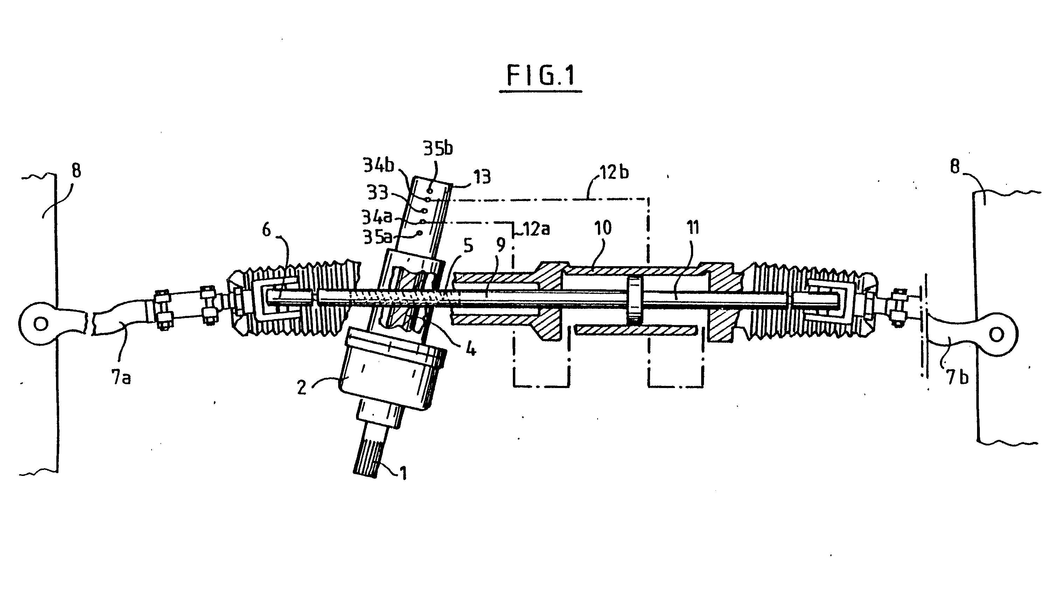

Dans la direction assistée représentée schématiquement à la Figure 1, un arbre 1 lié à la colonne de direction est monté à rotation dans un boîtier 2 et est relié de la manière décrite plus loin à un arbre suiveur 3, coaxial à l'arbre 1, portant un pignon 4 et également monté pivotant dans le boîtier. 2. Ce pignon est en prise avec une crémaillère 5 sur l'une des extrémités de laquelle est articulée en 6 une timonerie 7a reliée à l'une des roues directrices 8 du véhicule. L'autre extrémité de la crémaillère est reliée à l'une des tiges de piston 9 d'un vérin d'assistance, à double effet 10, dont l'autre tige de piston 11 est reliée par une timonerie articulée 7b à l'autre roue directrice 8. Le vérin 10 est relié par des conduites 12a et 12b à un distributeur 13, à tiroir coulissant, coaxial aux arbres 1 et 3 et fixé au boîtier 2, du côté opposé à l'arbre de commande 1, par rapport à l'arbre suiveur 3.

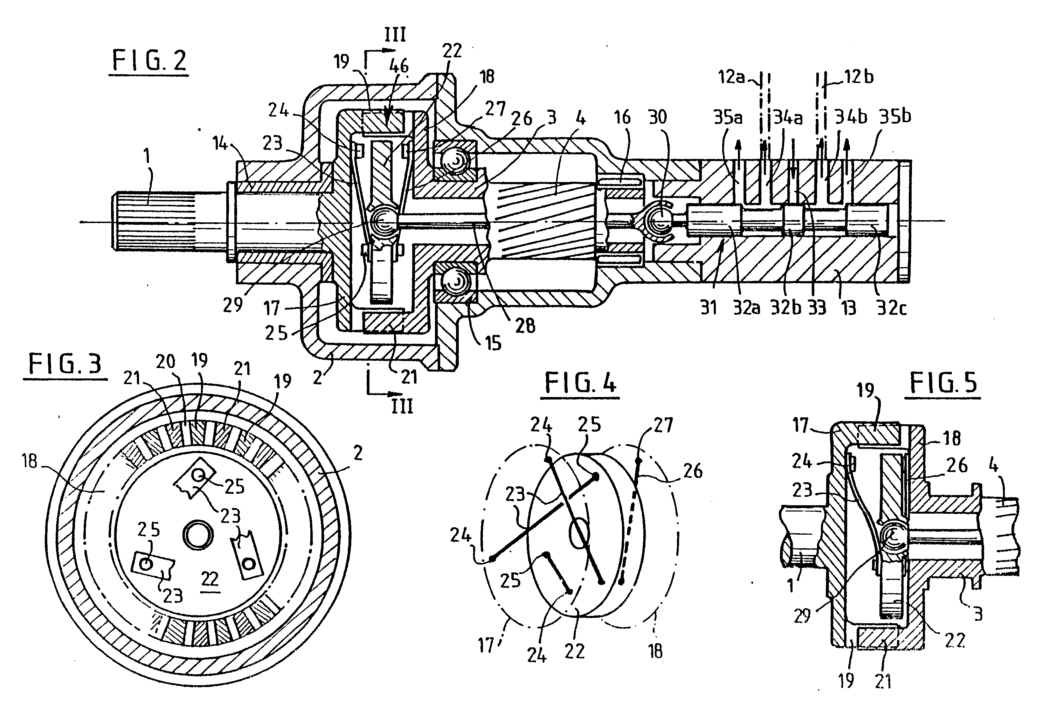

Comme on le voit plus particulièrement à la figure 2, l'arbre 1 est monté en rotation dans le boîtier 2 par l'intermédiaire d'un palier anti-friction 14. De son côté, l'arbre suiveur 3 est monté à rotation dans le boitier par l'intermédiaire d'un roulement à billes 15 et d'un roulement à aiguilles 16. Les deux arbres 1 et 3 portent à leur extrémité des plateaux respectivement 17 et 18 qui sont parallèles et disposés en vis-à-vis. Le plateau 17 porte des pattes 19 entre lesquelles sont engagées avec un jeu 20 des pattes 21 du plateau 18. En cas de défaillance du système d'assistance, l'arbre 1 peut ainsi, après rattrapage de jeu 20, entraîner l'arbre suiveur 3, donc le pignon 4 et la crémaillère de direction 5.

Entre les plateaux 17 et 18 se trouve un troisième plateau 22 parallèle aux plateaux 17 et 18 et relié au plateau 17 par des lames élastiques tarées 23 qui sont ici au nombre de trois et décalées les unes des autres de 120° autour de l'axe de la colonne de direction. Ces lames sont fixées à l'une de leurs extrémités en 24 à la périphérie du plateau 17 et à leur extrémité opposée en 25, à la périphérie du plateau 22, par exemple par des rivets ou des vis ou par ancrage. Elles sont disposées obliquement aussi bien par rapport au plan du plateau 22 que par rapport aux rayons passant par leurs points de fixation 25 sur ce plateau.

De manière analogue, les plateaux 18 et 22 sont liés l'un à l'autre par des lames élastiques tarées 26 qui sont disposées obliquement en étant fixées en 25 à la périphérie du plateau 22 et en 27 à la périphérie du plateau 18.

Les lames 26 sont disposées en sens contraire des lames 23, c'est-à-dire que deux lames 23 et 26 fixées à un même endroit 25 du plateau intermédiaire 22 forment l'une avec l'autre un V, symétriquement par rapport à ce plateau intermédiaire 22. Les plateaux 17, 18 et 22 et les lames élastiques 23 et 26 constituent un dispositif 46 qui assure à la fois la détection de couple exercé sur l'arbre 1 et la liaison élastique de cet arbre à l'arbre 3.

Une tige 28 traverse un perçage axial de l'arbre suiveur 3. Elle est reliée par une rotule 29 au plateau 22 et par une rotule 30 au tiroir 31 du distributeur 13.

Le distributeur 13 est agencé selon la disposition dite à « centre fermé » qui convient lorsque le véhicule est équipé d'un réservoir d'huile sous pression régulée. Le tiroir 31 comporte trois portées 32a, 32b et 32c qui coopèrent avec un perçage central 33 relié au réservoir sous pression, deux perçages 34a et 34b reliés aux conduits d'utilisation 12a et 12b, et deux perçages 35a et 35b reliés à l'échappement.

A la Figure 2, le distributeur 13 est en position d'équilibre. Le circuit haute pression est isolé par la portée 32b du tiroir et les conduits d'utilisation 12a et 12b sont reliés respectivement aux échappements 35a et 35b. Un déplacement longitudinal du tiroir 31 dans un sens ou dans l'autre, à partir de sa postition d'équilibre, a pour effet d'isoler l'un des circuits d'échappement et de relier le circuit d'utilisation correspondant à la haute pression pendant que l'autre circuit d'utilisation reste à l'échappement.

Mais le distributeur 13 pourrait être également agencé à « centre ouvert », dans le cas où l'alimentation serait assurée par une pompe à huile débitant en permanence.

Lorsque le conducteur manoeuvre le volant et fait ainsi pivoter l'arbre 1, le couple exercé sur le plateau 17 entraîne un déplacement axial du plateau 22. Si le couple est exercé dans le sens des lames 23, le plateau repousse ces lames, qui se détendent. Le plateau 22 se déplace en entraînant la tige 28 qui se déplace axialement vers le distributeur 13 (Figure 5). Le plateau 22 repousse à son tour les lames 26 qui fléchissent. Si le couple est exercé en sens contraire, le plateau 22 et la tige 28 s'éloignent du distributeur 13.

Comme les lames 23 fléchissent lorsque les lames 26 se redressent, et inversement, les lames 23 aussi bien que les lames 26 interviennent pour assurer les liaisons élastiques entre l'arbre de commande et l'arbre suiveur 3.

Lorsque le plateau 22 se déplace avec la tige 28, celle-ci entraîne le tiroir 31 du distributeur. L'un des conduits d'utilisation 12a ou 12b est mis en communication avec la haute pression de sorte que le piston du vérin 10 se déplace en entraînant la crémaillère 5 et par suite la tringlerie de direction. Le pignon 4 pivote en entraînant le plateau 18 qui tend à reprendre sa position angulaire initiale par rapport au plateau 17. L'arbre 3 suit ainsi le mouvement de pivotement de l'arbre 1.

Lorsque le couple cesse d'être exercé sur l'arbre de commande 1, la plateau 22 reprend sa position neutre et les deux circuits d'utilisation 12a et 12b sont de nouveau tous deux isolés de sorte que la crémaillère de direction 5 reste dans la position dans laquelle elle a été amenée.

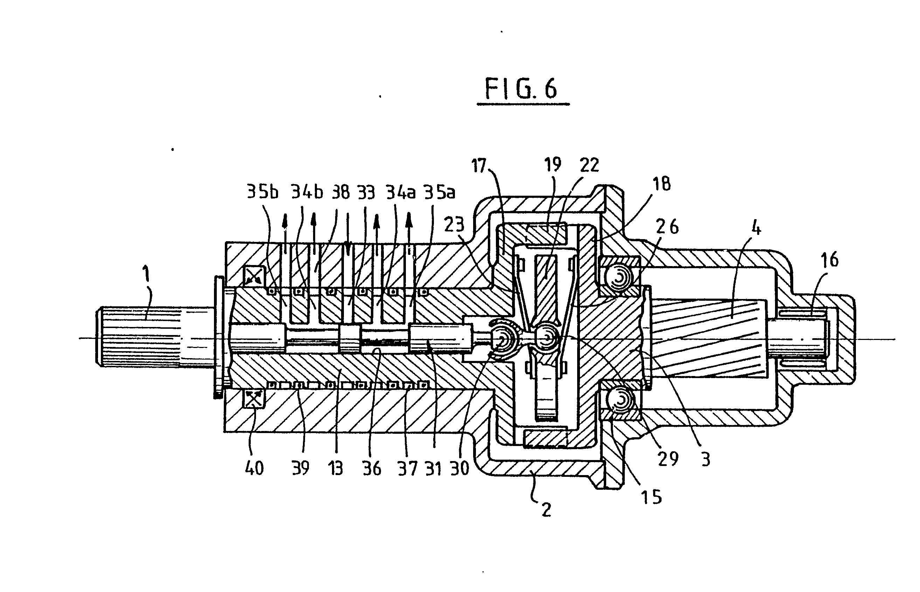

Dans le mode de réalisation de la Figure 6, le distributeur 13 est ménagé dans l'arbre 1. Celui-ci comporte un perçage axial 36 dans lequel est monté coulissant le tiroir 31, ainsi que les perçages radiaux 33, 34a et 34b, et 35a et 35b, qui débouchent dans des gorges 37 se trouvant en regard de perçages radiaux 38 du boîtier 1, l'étanchéité étant assurée entre les gorges par des joints toriques 39 et, vis-à-vis de l'extérieur, par un joint à lèvre 40.

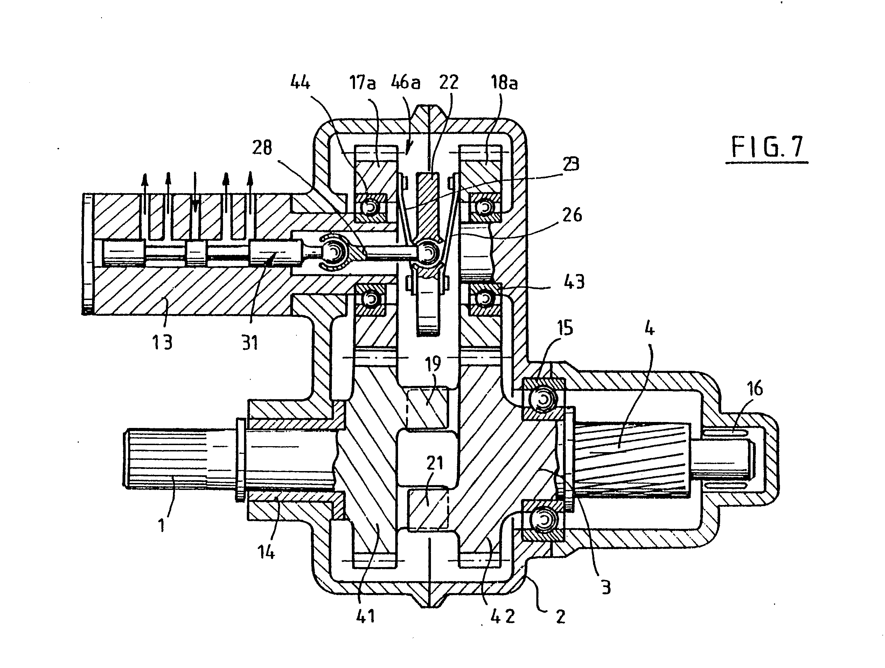

Dans le mode de réalisation de la Figure 7, les arbres 1 et 3 sont solidaires de pignons respectivement 41 et 42 qui portent les pattes 19 et 21. Les deux pignons 41 et 42 sont en prise respectivement avec des plateaux coaxiaux 17a et 18a du détecteur de couple 46a, qui sont dentés à leur périphérie ; le distributeur 13 est coaxial à ces plateaux. Le plateau 18a est supporté par le boîtier 2, par l'intermédiaire d'un roulement 43, alors que le plateau 17a est supporté par le distributeur 13, par l'intermédiaire d'un roulement 44. Le plateau intermédiaire 22 est, comme dans les modes de réalisation précédents, relié par les lames flexibles 23 et 26 aux plateaux 17a et 18a et par la bielle 28 au tiroir 31 du distributeur 13.

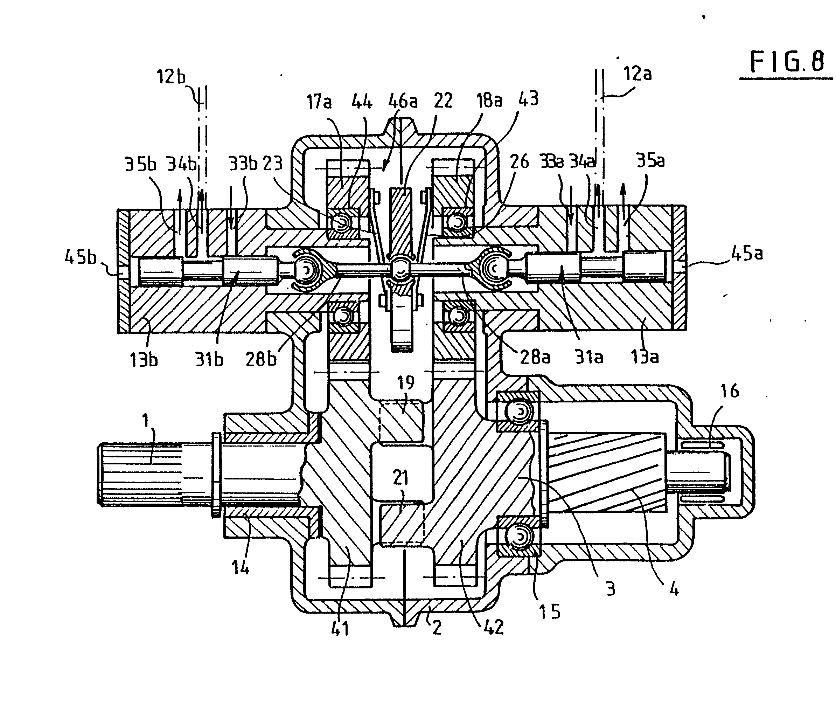

La Figure 8 montre une variante du mode de réalisation de la Figure 7, dans laquelle le distributeur 13 a été remplacé par deux demi-distributeurs 13a et 13b disposés de part et d'autre du détecteur de couple 46a et comportant chacun un demi-tiroir 31a ou 31b relié au plateau 22 par une bielle 28a ou 28b.

Les portées du tiroir 31a coopèrent avec un perçage 33a relié au réservoir sous pression, un perçage 34a relié au conduit d'utilisation 12a, et un perçage 35a relié à l'échappement. De manière analogue, les portées du tiroir 31b coopèrent avec un perçage 33b relié au réservoir sous pression, un perçage 34b relié au conduit 12b, et un perçage 35b relié à l'échappement.

L'alésage de chaque demi-distributeur est, du côté de la face libre du demi-tiroir, en communication par un perçage 45a ou 45b avec une source de contre-pression modulée en fonction d'un paramètre donné, par exemple la vitesse du véhicule. Cela permet d'accroître l'effort au volant pour un même angle de braquage, quand la vitesse du véhicule augmente.

**Revendications**

1. Direction assistée pour véhicule automobile comprenant un arbre de commande (1) monté à rotation dans un boîtier (2) et lié au volant, un arbre suiveur (3) également monté pivotant dans ce boîtier et relié mécaniquement à un pignon (4) en prise avec la crémaillère de direction (5), un capteur de couple reliant les deux arbres et comportant un arbre de sortie mobile axialement, un distributeur hydraulique (13 ou 13a-13b) à tiroir dont le tiroir (31, 31a ou 31b) est relié à l'élément de sortie du détecteur de couple, et un vérin d'assistance (10) sur l'alimentation duquel est interposé le distributeur et dont l'élément mobile est relié à la crémaillère (5), dans laquelle le capteur de couple comprend un premier élément de transmission d'extrémité (17 ou 17a) solidaire en rotation de l'arbre de commande (1), un deuxième élément de transmission d'extrémité (18 ou 18a) solidaire en rotation de l'arbre suiveur (3) coaxial au premier, et fixe axialement par rapport à celui-ci, et un troisième élément de transmission intermédiaire (22) qui est coaxial aux deux premiers et est relié au tiroir 31, 31a ou 31b) du distributeur (13, 13a ou 13b), cet élément intermédiaire étant en outre relié au second élément de transmission (18 ou 18a) par un premier jeu (26) de lames flexibles dirigées obliquement, caractérisée en ce que cet élément intermédiaire est relié au premier élément de transmission (17 ou 17a) par un second jeu (23) de lames flexibles qui sont dirigées obliquement en sens inverse par rapport aux lames flexibles du premier jeu (26).

2. Direction assistée selon la revendication 1, caractérisée en ce que le premier élément de transmission (17) et le second (18) sont constitués par des disques ou plateaux disposés en vis-à-vis, chacun des plateaux portant des pattes (19 ou 21) engagées avec un jeu (20) entre des pattes (21 ou 19) de l'autre plateau.

3. Direction assistée selon la revendication 1 ou 2, caractérisée en ce que les éléments de transmission d'extrémité (17 et 18) font corps respectivement avec l'arbre de commande (1) et l'arbre suiveur (3).

4. Direction assistée selon la revendication 1 ou 2, caractérisée en ce que les éléments de transmission d'extrémité (17a et 18a) sont reliés par des engrenages à l'arbre de commande (1) et à l'arbre suiveur (3).

5. Direction assistée selon la revendication 3, caractérisée en ce que les deux arbres de commande (1) et suiveur (3) sont coaxiaux et en ce que le distributeur (13) est fixé au boîtier (2) dans l'axe de ces deux arbres, du côté opposé à l'arbre de commande par rapport à l'arbre suiveur, l'arbre de transmission (28) passant dans un perçage axial de l'arbre suiveur (3).

6. Direction assistée selon la revendication 3, caractérisée en ce que le corps du distributeur (13) est constitué par l'arbre de commande (1), son tiroir (31) étant monté coulissant dans un alésage axial de cet arbre.

7. Direction assistée selon la revendication 4, caractérisée en ce que le distributeur (13 ou 13a-13b) est fixé au boîtier (2) coaxialement aux éléments de transmission.

8. Direction assistée selon la revendication 7, caractérisée en ce que le distributeur est constitué de deux demi-distributeurs (13a et 13b) disposés de part et d'autre des éléments de transmission et dont les tiroirs (31a et 31b) sont reliés à l'élément intermédiaire (22) par deux arbres indépendants (28a et 28b) qui traversent chacun l'un des éléments de transmission d'extrémité.

9. Direction assistée selon la revendication 8, caractérisée par des moyens pour appliquer sur les deux faces libres des tiroirs (31a et 31b) une contrepression modulée en fonction d'un paramètre, par exemple la vitesse du véhicule.

10. Direction assistée selon l'une des revendications précédentes, caractérisée par une articulation ou une rotule (30) interposée entre le tiroir (31, 31a ou 31b) et l'arbre de transmission (28, 28a ou 28b).

## Claims

1. Assisted steering for motor vehicles including a control shaft (1) mounted for rotation in a case (2) and connected to the steering wheel, a follower shaft (3) also mounted for rotation in this case and connected mechanically to a pinion (4) in mesh with the steering rack (5), a torque sensor connecting the two shafts together and including an axially mobile output shaft, a hydraulic spool distributor (13 or 13a/13b) whose spool (31, 31a or 31b) is connected to the output element of the torque detector, and an assistance cylinder (10) in the fluid supply of which said distributor is inserted and whose mobile element is connected to the rack (5), in which the torque sensor includes a first end transmission element (17 or 17a) interlocked for rotation with the control shaft (1), a second end transmission element (18 or 18a) interlocked for rotation with the follower shaft (3) coaxial with the first one, and fixed axially with respect thereto, and a third intermediate transmission element (22) which is coaxial with the first two and is connected to the spool (31, 31a or 31b) of the distributor (13, 13a or 13b), this intermediate element being further connected to the second transmission element (18 or 18a) by a first set of obliquely directed flexible blades, characterized in that this intermediate element is connected to the first transmission element (17 or 17a) by a second set (23) of flexible blades which are directed obliquely in the opposite direction with respect to the flexible blades of the first set (26).

2. Assisted steering according to claim 1, characterized in that the first transmission element (17) and the second one (18) are formed by disks or plates disposed in facing relation, each of the plates having lugs (19 or 21) engaged with play (20) between lugs (21 or 19) of the other plate.

3. Assisted steering according to claim 1, or 2, characterized in that the end transmission elements (17 and 18) are integral respectively with the control shaft (1) and the follower shaft (3).

4. Assisted steering according to claim 1, or 2, characterized in that the end transmission elements (17a and 18a) are connected by gearing to the control shaft (1) and to the follower shaft (3).

5. Assisted steering according to claim 3, characterized in that the two control (1) and follower (3) shafts are coaxial and in that the distributor (13) is fixed to the case (2) in the axis of these two shafts, on the side opposite the control shaft with respect to the follower shaft, the transmission shaft (28) passing through an axial bore in the follower shaft (3).

6. Assisted steering according to claim 3, characterized in that the body of the distributor (13) is formed by control shaft (1), its spool (31) being slidably mounted in the axial bore of this shaft.

7. Assisted steering according to claim 4, characterized in that the distributor (13 or 13a-13b) is fixed to the case (2) coaxially to the transmission elements.

8. Assisted steering according to claim 7, characterized in that the distributor is formed of two semidistributors (13a and 13b) disposed on each side of the transmission elements and the spools (31a and 31b) of which are connected to the intermediate element (22) through independent shafts (28a and 28b) which each pass through one of the end transmission elements.

9. Assisted steering according to claim 8, characterized by means for applying to the two free faces of the spools (31a and 31b) a counterpressure modulated as a function of a parameter, for example the speed of the vehicle.

10. Assisted steering according to one of the preceding claims, characterized by an articulation or a ball joint (30) inserted between the spool (31, 31a or 31b) and the transmission shaft (28, 28a or 28b).

## Patentansprüche

1. Servolenkung für Kraftfahrzeug mit einer drehbar in einem Gehäuse (2) montierten und mit dem Lenkrad verbundenen Antriebswelle (1), einer ebenfalls drehbar in diesem Gehäuse montierten Folgewelle (3), die mechanisch mit einem Ritzel (4) verbunden ist, das mit der Lenkzahnstange (5) in Eingriff steht, einem die beiden Wellen verbindenden Drehmomentfühler, der eine in axiale Richtung bewegliche Abtriebswelle aufweist, einem hydraulischen Verteiler (13 oder 13a bzw. 13b) mit einem Schieber (31, 31a oder 31b), der mit dem Ausgangselement des Drehmomentaufnehmers verbunden ist und einer Hilfswinde (10), in deren Zuleitung der Verteiler eingeschaltet ist und deren bewegbares Element mit der Zahnstange (5) verbunden ist, bei welcher der Drehmomentfühler ein mit der Antriebswelle (1) in Bezug auf Drehung kraftschlüssig verbundenes erstes Endübertragungselement (17 oder 17a), ein mit der Folgewelle (3) in Bezug auf Drehung kraftschlüssig verbundenes und koaxial zum ersten und in Bezug auf dieses in axialer Richtung fest angeordnetes zweites Endübertragungselement (18 oder 18a) und ein zwischengeschaltetes drittes Übertragungselement (22) aufweist, das koaxial zu den beiden ersten Elementen angeordnet ist und mit dem Schieber (31, 31a oder 31b) des Verteilers (13, 13a oder 13b) verbunden ist, wobei dieses zwischengeschaltete Element außerdem mit dem zweiten Übertragungselement (18 oder 18a) durch eine erste Gruppe (28) von schräg ausgerichteten flexiblen Lamellen verbunden ist, dadurch gekennzeichnet, daß dieses zwischengeschaltete Element mit dem ersten Übertragungselement (17 oder 17a) durch eine zweite Gruppe (23) von flexiblen Lamellen verbunden ist, die im entgegengesetzten Sinne in Bezug auf die flexiblen Lamellen der ersten Gruppe (28) schräg ausgerichtet sind.

2. Servolenkung nach Anspruch 1, dadurch gekennzeichnet, daß das erste und zweite Übertragungselement (17 bzw. 18) durch einander gegenüberliegend angeordnete Scheiben oder Platten gebildet sind, wobei jede der Platten Klauen (19 oder 21) aufweist, die mit einem Spiel (20) zwischen die Klauen (21 oder 19) der anderen Platte eingreifen.

3. Servolenkung nach Anspruch 1 oder 2, dadurch gekennzeichnet, daß die Endübertragungselemente (17 und 18) jeweils einstückig mit der Antriebswelle (1) bzw. der Folgewelle (3) verbunden sind.

4. Servolenkung nach Anspruch 1 oder 2, dadurch gekennzeichnet, daß die Endübertragungselemente (17a und 18a) über Verzahnungen mit der Antriebswelle (1) und der Folgewelle (3) verbunden sind.

5. Servolenkung nach Anspruch 3, dadurch gekennzeichnet, daß die Antriebswelle (1) und die Folgewelle (3) koaxial zueinander angeordnet sind und daß der Verteiler (13) am Gehäuse (2) auf der Achse dieser beiden Wellen an der Seite, die von der Folgewelle aus gesehen, in entgegengesetzter Richtung zur Antriebswelle liegt, befestigt ist, wobei die Übertragungswelle (28) durch eine axiale Bohrung der Folgewelle (3) hindurchgeführt ist.

6. Servolenkung nach Anspruch 3, dadurch gekennzeichnet, daß der Körper des Verteilers (13) durch die Antriebswelle (1) gebildet wird und sein Schieber (31) verschiebbar in einer axialen Bohrung dieser Welle angeordnet ist.

7. Servolenkung nach Anspruch 4, dadurch gekennzeichnet, daß der Verteiler (13 oder 13a-13b) am Gehäuse (2) koaxial zu den Übertragungselementen angeordnet ist.

8. Servolenkung nach Anspruch 7, dadurch gekennzeichnet, daß der Verteiler durch zwei Halbverteiler (13a und 13b) gebildet wird, die zu beiden Seiten der Übertragungselemente angeordnet sind und deren Schieber (31a und 31b) mit dem zwischengeschalteten Element (22) durch zwei voneinander unabhängige Wellen (28a und 28b) verbunden sind, von denen jede durch eines der Endübertragungselemente hindurchgeführt ist.

9. Servolenkung nach Anspruch 8, gekennzeichnet durch Mittel, um an die beiden freien Flächen der Schieber (31a und 31b) einen Gegendruck anzulegen, der in Abhängigkeit von einem Parameter, z. B. der Fahrzeuggeschwindigkeit, moduliert ist.

10. Servolenkung nach einem der vorhergehenden Ansprüche, gekennzeichnet durch eine Gelenkverbindung oder ein Kugelgelenk (30), das zwischen den Schieber (31, 31a oder 31b) und die Übertragungswelle (28, 28a oder 28b) eingeschaltet ist.

# FIG.1

0 147 290

FIG. 2

FIG. 3

FIG. 4

FIG. 5

0 147 290

FIG.6

FIG.7

FIG.8